# EUROPÄISCHE PATENTSCHRIFT

(11) **EP 1 772 258 B1**
(45) Veröffentlichungstag und Bekanntmachung des Hinweises auf die Patenterteilung: **12.03.2008**
(21) Anmeldenummer: 06019521.1
(22) Anmeldetag: 19.09.2006
(51) Int. Cl.: B32B 5/26, B60R 13/02, D04H 13/00

(54) **Verwendung eines Vlieslaminats für die Herstellung von faserverstärkten Kunststoffteilen und faserverstärktes Kunststoffteil**
Use of a web laminate for production of fibre-reinforced parts and fibre-reinforced part
Utilisation d'un stratifié non-tissé pour la préparation de pièces renforcées et pièce renforcée

(30) Priorität: 06.10.2005 DE 102005048603
(43) Veröffentlichungstag der Anmeldung: 11.04.2007
(73) Patentinhaber: J. H. Ziegler GmbH & Co. KG, 77846 Achern (DE)
(72) Erfinder: Keck, Sabine, 77855 Achern (DE); Doll, Andreas, 77871 Renchen (DE)
(74) Vertreter: Friz, Oliver

(56) Entgegenhaltungen:
- WO-A-91/18234
- WO-A-98/05491
- WO-A-99/64533
- WO-A1-03/038175
- DE-A1- 3 314 458
- DE-A1- 4 407 097

## Beschreibung

Die Erfindung betrifft ein mit Kunststoff infiltrierbares Vlieslaminat für die Herstellung von faserverstärkten Kunststoffteilen, mit einer Vliesschicht als Kernlage (sogenannter "core") und wenigstens einer Deckschicht, welche die Verstärkungsfasern umfasst oder aus den Verstärkungsfasern gebildet ist. Derartige infiltrierbare Vlieslaminate werden bei der Herstellung von im Wesentlichen starren faserverstärkten Kunststoffteilen verwendet, wobei der
Kunststoff ein Harz, insbesondere auf Polyesterbasis oder Expoxybasis, umfasst, welches dann vollständig in das poröse Vlieslaminat eindringt. Bei Erstarren des gießbaren Kunststoffs entsteht ein für hohe Beanspruchungen geeignetes faserverstärktes Kunststoffteil. Die Verstärkungsfasern sind beispielsweise Glasfasern oder Carbonfasern.

WO-A-03/038175 zeigt ein Vlieslaminat für die Herstellung eines solchen faserverstärkten Kunststoffteils, wobei das Vlieslaminat eine aus synthetischen oder natürlichen Fasern gebildete Kernlage und eine Deckschicht aus Glasfasern umfasst, die miteinander vernadelt sind.

WO-A-91/18234 zeigt ein Material zur Herstellung eines Ausbesserungsschlauchs zur Innenerneuerung von Kanalleitungen mit einer Kernlage aus PES/Polyacrylfasermatte und Deckschichten aus Glasfasern. Zur Herstellung des Schlauchs wird eine Längsnaht durch Schweißen hergestellt. Der Schlauch ist durch Harz infiltrierbar, er wird im infiltrierten Zustand in der Kanalleitung aufgeweitet und dann ausgehärtet.

DE-A-4407097 offenbart ein Vlieslaminat mit einer Kernlage und mit Deckschichten aus thermoplastischen Fasern zur Verwendung bei Polstermaterialien, Sitzbezügen oder Matratzen. Kernlage und Deckschichten sind entweder durch hindurchgehende Polfäden miteinander verbunden oder durch Temperatureinwirkung oder durch eine Mischung aus Temperatureinwirkung und Druck. Eine Infiltration mit aushärtbarem Harz ist weder offenbart noch naheliegend.

In der Vergangenheit wurden im Bereich der Faserverbundwerkstoffe verschiedenste textile Verstärkungsstrukturen wie z. B. Gewebe, Textilgitter, Nichtwebstoffe oder eine Verbindung derartiger Elemente verwendet, die in mehreren Schichten übereinander gelegt und mit einer so genannten "Näh-Wirk-Technik" miteinander verbunden wurden. Diese Materialien waren zwar für die Herstellung ebener Verbunde zufrieden stellend, wiesen jedoch für die Herstellung tief gezogener Bauteile eine zu geringe Drapierfähigkeit auf. Zudem erlaubten sie nur beschränkt eine größere Dicke, die jedoch in vielen Anwendungsfällen eine wichtige und unabdingbare Eigenschaft darstellt.

Aus Gründen der Kosten- und Gewichtsreduzierung der Verstär-kungsstrukturen wurde eine, aus einer Schaumschicht gebildete Kernschicht realisiert, bei der jedoch Homogenitätsprobleme beim Harzeintrag mit den Verfahren "Pressformung mit Injektion" oder "Vakuumformung" festgestellt wurden.

Aus EP 0395 548 B1 (DE 69003436 T2) ist eine Kernlage bekannt, die sowohl den Erhalt einer grösseren Dicke als auch eine bessere Drapierbarkeit und homogenere Harzverteilung gewährleisten soll. Diese Zentralschicht wird aus synthetischen Fasern mit einer Stärke von mindestens 30 dtex und einer Schnittlänge zwischen 40 und 70 mm durch Kardierung gebildet und evtl. einer leichten Vernadelung unterworfen um mehr Zusammenhalt zu erreichen.

Die Fasern weisen eine gewisse Kräuselung auf um eine leichte, dicke und lufthaltige Lage zu erzeugen.

Es hat sich jedoch gezeigt, dass eine solche Kernlage ihren Zweck nicht optimal erfüllt, da der Faserverbund nur geringe Festigkeiten aufweist. Aus diesem Grund entstehen in den weiterverarbeitenden Arbeitsgängen Verarbeitungsprobleme durch starkes Verziehen bei der Herstellung des Vlieslaminats (Kernlage + Deckschicht(en)) aus mehreren Lagen.

Die Druckschriften DE 198 32 721 A1, EP 0 774 343 A1 und US 6,156,682 befassen sich mit fertig verwendbaren mehrschichtigen Vlieslaminaten, bei denen auch Verstärkungsfasern verwendet sind. Die Schichten sind teilweise mit thermoplastischem Kunststoff befüllt. Eine bestimmungsgemäße Infiltration mit aushärtbarem Kunststoff ist weder vorgesehen noch möglich. Die Druckschriften befassen sich eher mit formstabilen jedoch biegsamen Vlieslaminaten für die Verwendung bei der Kraftfahrzeuginnenauskleidung. DE 195 21 838 A1 befasst sich mit einem bituminierbaren Vlieslaminat für Dach- und Dichtungsbahnen. Diese umfassen eine Kernschicht aus Träger- und Bindefasern, die zur Erzielung von Brandschutz beidseitig eine flammhemmende Schicht, vorzugsweise ein Glasvlies oder eine Metallfolie, aufweist. Bevorzugt ist ein Glasvlies, das zugleich verstärkend wirkt. Zur Verbesserung der Bitumenhaftung wird auf der Außenseite der Verstärkungsschichten ein weiteres textiles Flächengebilde, vorzugsweise in Form eines Feinvlieses, aufgebracht. Eine Infiltration mit aushärtbarem Kunststoff ist weder vorgesehen noch möglich, vielmehr bildet der beschriebene Flächenverbund die Dach- und Dichtungsbahn.

Der vorliegenden Erfindung liegt die Aufgabe zugrunde, ein poröses Vlieslaminat der eingangs genannten Art zu schaffen, bei dem die Kernlage besser mit der oder den Deckschichten verarbeitet werden kann.

Diese Aufgabe wird durch eine Verwendung mit den Merkmalen des Anspruchs 1 und durch ein faserverstärktes Kunststoffteil mit den Merkmalen des Anspruchs 17 gelöst.

Indem die die Kernlage bildende Vliesschicht, vorzugsweise vor dem Zusammenbringen mit der wenigstens einen Deckschicht, durch Erwärmen auf die Schmelz- oder Erweichungstemperatur der Bindefasern, jedoch unterhalb der Schmelz- oder Erweichungstemperatur der Trägerfasern, thermisch verfestigt wurde, lässt sich eine deutlich höhere innere Festigkeit und Dimensionsstabilität der Vliesschicht erreichen. Dies erleichtert die Weiterverarbeitung der Vliesschicht als Kernlage eines porösen Vlieslaminats der beanspruchten Art.

Es erweist sich als vorteilhaft, wenn die Kernlage ein Flächengewicht von 100 bis 500 g/m², insbesondere von 125 bis 400 g/m², insbesondere von 125 bis 300 g/m², insbesondere von 125 bis 250 g/m² und weiter insbesondere von 150 bis 250 g/m² aufweist.

Des Weiteren erweist es sich als vorteilhaft, wenn die Kernlage eine Dicke von 3 bis 18 mm, insbesondere von 3 bis 15 mm, insbesondere von 3 bis 12 mm, insbesondere von 3,5 bis 10 mm, insbesondere von 3,5 bis 8 mm, insbesondere von 4 bis 8 mm aufweist. Die Dicke wird dabei gemäß DIN EN ISO 9073-2 bei einem Prüfdruck von 0,5 kPa gemessen, und zwar vor dem Laminieren der Kernlage mit der wenigstens einen Deckschicht.

Es ist zur Herstellung der thermisch verfestigten Kernlage denkbar, dass die Fasermischung Monokomponentenfasern mit unterschiedlichen Schmelzpunkten aufweist. Es erweist sich aber bei einer bevorzugten Ausführungsform der Erfindung als vorteilhaft, dass die Bindefasern Bikomponentenfasern umfassen. Insbesondere erweist sich der Einsatz von PP/PE-Bikomponentenfasern (Polypropylen/Polyethylen) oder von PES/COPES-Bikomponentenfasern (Polyester/Copolyester) als vorteilhaft. In bevorzugter Weise finden Kern-Mantel-Fasern Verwendung, bei denen der Kern der Faser aus einer höherschmelzenden Komponente (beispielsweise PP) und der Mantel der Faser aus einer niedrigerschmelzenden Komponente (z. B. Polyethylen) gebildet ist. Es sind hier aber zahlreiche andere Polymermischungen wie z. B. PA6.6/PA6 denkbar und vorteilhaft. Auch die Ausbildung von Bikomponentenfasern oder Mehrkomponentenfasern als Seitean-Seite-Fasern oder Sea-Island-Fasern oder Splitfasern ist denkbar. Bei Verwendung von Bikomponentenfasern oder allgemein Mehrkomponentenfasern wird bei der thermischen Verfestigung der als Kernlage einzusetzenden Vliesschicht die Temperatur bei der Wärmebehandlung so gewählt, dass sie höher ist als die niedrigschmelzende Komponente der Bikomponentenfasern, jedoch geringer als die Schmelz- oder Erweichungstemperatur der höherschmelzenden Komponente der Bikomponentenfasern und der Trägerfasern. Auf diese Weise wird ein optimaler Zusammenhalt der Vliesschicht erreicht.

Es kann sich als vorteilhaft erweisen, dass die Bikomponentenfasern vor der thermischen Behandlung der Kernlage eine Faserstärke von wenigstens 10 dtex, insbesondere von wenigstens 12 dtex, insbesondere von wenigstens 14 dtex, insbesondere von wenigstens 15 dtex und weiter insbesondere von 15 dtex bis 130 dtex aufweisen. Es wird aber ausdrücklich darauf hingewiesen, dass für einzelne Anwendungen auch feinere Bikomponentenfasern einer Faserstärke von weniger als 10 dtex, insbesondere von 2 - 8 dtex, verwendet werden können.

Die Faserlänge der Bikomponentenfasern beträgt vorzugsweise wenigstens 20 mm, insbesondere wenigstens 30 mm und weiter insbesondere 35 bis 100 mm.

Es erweist sich des Weiteren als vorteilhaft, wenn die Kernlage Trägerfasern auf Polyolefin-Basis, insbesondere aus Polypropylen (PP), umfasst.

Bei einer bevorzugten Ausführungsform der Erfindung weist die Kernlage eine Höchstzugkraft in Längsrichtung (HKZ längs) von wenigstens 5N/5cm, insbesondere von wenigstens 5,5N/5cm auf, jeweils ohne Vernadelung der Kernlage.

Die Kernlage weist weiter eine Höchstzugkraft in Längsrichtung (HZK längs) von wenigstens 6,5N/5cm, insbesondere von wenigstens 7N/5cm, insbesondere von wenigstens 7,5N/5cm auf, jeweils im vernadelten Zustand der Kernlage.

Die Höchstzugkraftdehnung der Kernlage in Längsrichtung (HZK D längs) beträgt im nicht vernadelten Zustand der Kernlage wenigstens 35% und im vernadelten Zustand der Kernlage wenigstens 45%, insbesondere wenigstens 50%.

### Bestimmung der Höchstzugkraft und der Höchstzugkraftdehnung

Die Bestimmung der Höchstzugkraft und Höchstzugkraftdehnung erfolgt angelehnt an DIN EN 29 073 Teil 3. Zur Probenvorbereitung werden unter Verwendung eines Stanzwerkzeugs jeweils fünf streifenförmige Prüflinge einer Größe von 50 x 300 mm aus der als Kernlage in dem porösen Vlieslaminat zu verwendenden Vliesschicht ausgestanzt. Die Prüflinge müssen mindestens 100 mm vom Vliesrand entfernt entnommen werden.

Zur Durchführung der Prüfung kann eine Zwickuniversalprüfmaschine 1425 verwendet werden. Ein jeweiliger Prüfling wird an den Einspannklemmen befestigt, so dass die Einspannklemmen einen Abstand von 200 mm ± 1 mm voneinander haben. Die Prüflinge werden über ihre volle Breite von 50 mm eingespannt. Die Prüfgeschwindigkeit beträgt 200 m/min. Mit dieser Geschwindigkeit wird also die bewegliche Einspannklemme von der feststehenden Einspannklemme weg bewegt. Währenddessen wird die Kraft gemessen und aufgezeichnet. Üblicherweise wird unter der Höchstzugkraft diejenige Kraft verstanden, bei der der jeweilige Prüfling zerreißt. Die während einer Prüfung erreichte und aufgezeichnete maximale Kraft wird als Höchstzugkraft des Prüflings angegeben. Im Prüfbericht wird eine mittlere Höchstzugkraft auf 0,1 N genau angegeben.

Unter der Höchstzugkraftdehnung ist die Längenänderung der Messprobe beim Erreichen der Höchstzugkraft zu verstehen; sie wird in Prozent der Einspannlänge angegeben. Im Prüfbericht wird die mittlere Höchstzugkraftdehnung angegeben.

Wie bereits erwähnt, kann es sich als vorteilhaft erweisen, wenn die Kernlage zusätzlich zur thermischen Bindung oder Verfestigung vernadelt ist.

Es erweist sich weiter als vorteilhaft, wenn wenigstens zwei Deckschichten vorgesehen sind und die Kernlage zwischen diesen Deckschichten sandwichartig angeordnet ist.

Die wenigstens eine Deckschicht und die Kernlage sind in vorteilhafter Weise durch eine Naht miteinander verbunden.

Wie bereits erwähnt, sind die Verstärkungsfäden der wenigstens einen Deckschicht Glasfasern oder Carbonfasern oder hochbelastbare Kunststofffasern, insbesondere Aramidfasern oder UHMW-PE-Fasern (Ultra High Molecular Weight - Fasern).

Die wenigstens eine Deckschicht kann ein textiles Flächengebilde, wie "chopped glass fibers", ein Gewebe, Gewirk oder Gestrick, oder ein Multiaxialgelege mit Verstärkungsfäden umfassen.

Die Erfindung betrifft des Weiteren die Verwendung eines Vlieslaminats nach Anspruch 18.

Ferner ist Gegenstand der Erfindung ein faserverstärktes Kunststoffteil nach Anspruch 19.

Weitere Merkmale, Einzelheiten und Vorteile der Erfindung ergeben sich aus der zeichnerischen Darstellung und nachfolgenden Beschreibung einer bevorzugten Ausführungsform des erfindungsgemäßen Vlieslaminats. In der Zeichnung zeigt:
- Figur 1: eine perspektivische Darstellung einer Ausführungsform des erfindungsgemäßen Vlieslaminats (schematisch);
- Figur 2: eine Draufsicht auf das Vlieslaminat nach Figur 1 (schematisch), und
- Figur 3: eine Ansicht des Vlieslaminats nach Figur 1 von unten (schematisch).

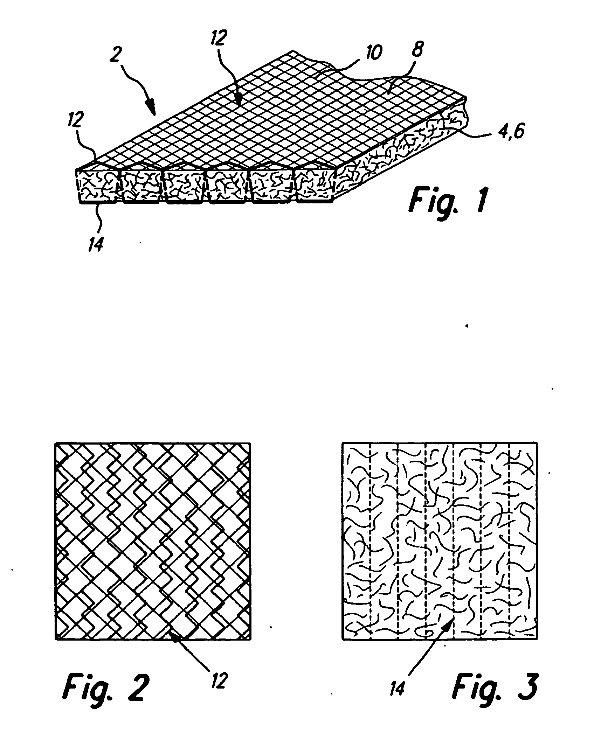

Figur 1 zeigt eine schematische teilweise geschnittene Darstellung eines erfindungsgemäßen mit Kunststoff infiltrierbaren Vlieslaminats 2, welches für die Herstellung von faserverstärkten Kunststoffteilen verwendbar ist. Es umfasst eine Vliesschicht 4 als Kernlage 6 ("core") und eine Deckschicht 8 auf einer Seite. Die Deckschicht 8 besteht im Wesentlichen aus Verstärkungsfasern 10, die im dargestellten beispielhaften Fall in Form eines Multiaxialgeleges 12 vorgesehen sind. Die Deckschicht 8 und die Kernlage 6 sind über einen oberen und unteren Nähfaden 12 bzw. 14 miteinander vernäht, was aber lediglich anhand eines Fadens schematisch dargestellt ist. Aus den Figuren 2 und 3 ist der Verlauf des Nähfadens 12 auf einer Seite (Figur 2) und des Nähfadens 14 auf der anderen Seite, also der Nahtverlauf, schematisch dargestellt.

Bei einer anderen nicht dargestellten Ausführungsform ist auf beiden Seiten der Kernlage 6 eine Deckschicht mit Verstärkungsfäden vorgesehen.

Die Vliesschicht 4 als Kernlage 6 ist gebildet aus einer Fasermischung aus Trägerfasern und thermoplastischen Bindefasern, wobei der Schmelz- oder Erweichungspunkt der Bindefasern oder einer Komponente der Bindefasern geringer ist als derjenige der Trägerfasern. Durch eine Temperaturbehandlung ist die Kernlage 6 thermisch verfestigt, was deren Verarbeitbarkeit und die Konfektionierbarkeit des Vlieslaminats als Ganzes verbessert.

Nachfolgend werden Vergleichsmessungen erläutert. Eine erfindungsgemäße Vliesschicht (Kernlage) wurde durch Kardieren, Vernadeln und anschließende thermische Behandlung bei 130°C hergestellt, und zwar ausgehend von einer Fasermischung aus 90 Gew.-% PP-Fasern (Polypropylen) und 10 Gew.-% PP/PE-Bikomponentenfasern (Polypropylen/Polyethylen)(Beispiel 1A). Die 90 Gew.-% Polypropylen-Fasern setzen sich wie folgt zusammen: 50 Gew.-% haben eine Faserstärke von 110 dtex und eine Faserlänge von 76 mm, 30 Gew.-% haben eine Faserstärke von 70 dtex und eine Faserlänge von 76 mm und 10 Gew.-% haben eine Faserstärke von 17 dtex und eine Faserlänge von 50 mm. Die Bikomponentenfasern haben eine Faserstärke von 16,7 dtex und eine Faserlänge von 40 mm. Die Fasermischung weist ein Flächengewicht von ca. 193 g/m² und eine Dicke von ca. 4,8 mm gemessen bei einem Prüfdruck von 0,5 kPa auf.

### Vergleichsbeispiel 1B:

Zum Vergleich wird durch Kardieren und Vernadeln einer Fasermischung aus den folgenden PP-Fasern eine Vliesschicht hergestellt:
- 50 Gew.-% 110 dtex PP-Fasern, Faserlänge 76 mm
- 30 Gew.-% 70 dtex PP-Fasern Faserlänge 76 mm
- 20 Gew.-% 17 dtex PP-Fasern, Faserlänge 50 mm.

Die thermische Behandlung des Vlieses entfällt hier. Das Vlies umfasst ein Flächengewicht von ca. 202 g/m² und hat eine Dicke von ca. 5,4 mm (wiederum gemessen bei einem Prüfdruck von 0,5 kPa).

Es wurden dann die Höchstzugkraft und die Höchstzugkraftdehnung in Längsrichtung, also in der Maschinenrichtung, und quer zur Maschinenrichtung des Vliesmaterials gemäß der obigen Prüfung bestimmt. Die Ergebnisse sind in Tabelle 1 angegeben.

**Tabelle 1**

| | ohne Bindefasern (Beispiel 1B) | mit Bindefasem (Beispiel 1A) |
|---|---|---|
| HZK längs | 3,90 | 7,72 |
| HZK quer | 4,83 | 8,42 |
| HZKD längs | 36,38 | 55,08 |
| HZKD quer | 54,45 | 51,54 |

Durch den Einsatz von Bindefasern und die thermische Verfestigung des Vliesmaterials wird die Stabilität des Materials deutlich erhöht und die Verarbeitbarkeit dadurch verbessert. Die Drapierbarkeit und die Harzdurchlässigkeit, also der Widerstand bei der Infiltration durch Kunststoff, werden durch den Einsatz von Bindefasern nicht negativ beeinflusst.

Nachfolgend werden weitere Vergleichsmessungen angegeben, wobei beim erfindungsgemäßen Produkt auf eine Vernadelung verzichtet wurde (nachfolgend Beispiel 2A). Die Vliesschicht wurde in einem aerodynamischen Prozess auf einer Fehrer High-Loft-Karde K12 gebildet und anschließend thermisch verfestigt. Die Fasermischung bestand zu 85 Gew.-% aus PP-Fasern einer Faserstärke von 110 dtex und einer Faserlänge von 60 mm und zu 15 Gew.-% aus PP/PE-Bikomponentenfasern einer Faserstärke von 16,7 dtex und einer Faserlänge von 40 mm. Hierdurch konnte eine deutlich voluminösere Vliesschicht als beim Beispiel 1A erreicht werden. Ihre Dicke beträgt 18 mm gemessen bei einem Prüfdruck von 0,02 kPa und ca. 14,5 mm bei einem Prüfdruck von 0,5 kPa. Wie die nachfolgenden Messwerte gemäß Tabelle 2 zeigen, verfügt die voluminöse nicht vernadelte Vliesschicht gemäß Beispiel 2A dennoch über etwas höhere Festigkeiten (in der Längsrichtung) als die vernadelte Vliesschicht gemäß Beispiel 1B.

**Tabelle 2**

| | ohne Vernadelung (Beispiel 2A) | Stand der Technik (Beispiel 1 B) |
|---|---|---|
| HZK längs | 5,76 | 3,90 |
| HZK quer | 4,55 | 4,83 |
| HZKD längs | 35,66 | 36,38 |
| HZKD quer | 59,59 | 54,45 |

Ein weiterer Vorteil dieses Materials ist die schnellere Harzdurchdringung und der größeren Offenheit oder Offenporigkeit der Vliesschicht (Kernlage). Eine schnelle Harzdurchdringung ist aber ein wesentlicher Vorteil für eine rationelle Fertigung der faserverstärkten Kunststoffteile.

Bei Anwendungen, bei denen eine derart voluminöse Vliesschicht aus Gründen der Geometrie nicht als Kernlage (core) eingesetzt werden kann, kann in einem zweiten Arbeitsschritt zusätzlich eine Vernadelung der Schicht vorgesehen werden. Dies ist auch noch bei der Herstellung des Vlieslaminats, also beim Verbinden der Vliesschicht als Kernlage mit der wenigstens einen Deckschicht möglich.

Bei einem weiteren Ausführungsbeispiel umfasst die Kernlage eine Fasermischung auf Polyesterbasis. Sie ist gebildet aus 90 Gew.-% 66 dtex PES-Fasern (Polyester) und 10 Gew.-% PES/COPES-Bikomponentenfasern (Polyester/Copolyester) mit einer Faserstärke von 4,4 dtex. Aufgrund der Verfügbarkeit der Polyesterbindefasern vornehmlich im feinen Titerbereich (dtex-Werte < 10 dtex, insbesondere < 8 dtex, insbesondere 6 dtex) wurde der Bindefaseranteil bewusst verhältnismäßig gering gehalten. Auch in diesem Fall konnte eine deutliche Erhöhung der Festigkeit gegenüber lediglich vernadeltem Material ohne thermische Verfestigung festgestellt werden. Hier besteht auch der Vorteil, dass bei Verwendung eines Polyesterharzes zur Herstellung des faserverstärkten Kunststoffteils ein sortenreiner Verbundstoff erhalten wird.

Wie bereits angedeutet, können auch Fasermischungen auf Basis von Monokomponentenfasern gewählt werden, die unterschiedliche Schmelz- oder Erweichungspunkte aufweisen, wie z. B. PA6.6 und PA6 (Polyamid).

Bei einem weiteren Ausführungsbeispiel werden Mischungen verwendet, die als Bindefaser eine niedrigschmelzende Monokomponentenfaser enthalten. Ein Beispiel hierfür sind Fasermischungen mit einem Anteil (z.B. 95 Gew.-%) Standardpolyesterfasern und mit einem Anteil (z.B. 5 Gew.-%) niedriger schmelzenden Monokomponenten-Polyesterfasern als Bindefasern, wie z. B. die Faser Grilene KE 150 der Firma EMS Chemie (Schweiz).

Sämtliche vorstehend erwähnten Vliesschichten lassen sich als Kernlage zur Herstellung eines infiltrierbaren Vlieslaminats mit wenigstens einer, vorzugsweise mit wenigstens zwei Deckschichten mit oder aus Verstärkungsfasern verbinden, so wie dies im Zusammenhang mit Figur 1 dargestellt und erläutert ist.

## Patentansprüche

1. Verwendung eines Vlieslaminats (2) mit einer Vliesschicht (4) als Kernlage (6) (core) und wenigstens einer Deckschicht (8), welche Verstärkungsfasern (10) umfasst oder aus Verstärkungsfasern (10) gebildet ist, wobei die Verstärkungsfasern (10) der wenigstens einen Deckschicht (8) Glasfasern oder Carbonfasern, insbesondere Aramidfasern umfassen, wobei die Kernlage (6) eine Fasermischung aus Trägerfasern und thermoplastischen Bindefasern umfasst, wobei der Schmelz- oder Erweichungspunkt der Bindefasern geringer ist als derjenige der Trägerfasern und die die Kernlage (6) bildende Vliesschicht (4) durch Erwärmen auf die Schmelz- oder Erweichungstemperatur der Bindefasern, jedoch unterhalb der Schmelz- oder Erweichungstemperatur der Trägerfasern thermisch verfestigt ist, und wobei die wenigstens eine Deckschicht (8) und die Kernlage (6) durch eine Naht unter Verwendung eines Nähfadens (12, 14) miteinander verbunden sind,
zur Herstellung eines faserverstärkten Kunststoffteils, indem das Vlieslaminat (2) mit flüssigem, jedoch aushärtbarem Kunststoff in Form eines Harzes, insbesondere auf Polyesterbasis oder Epoxybasis, in einer der Gestalt des herzustellenden Kunststoffteils entsprechenden Form infiltriert wird

2. Verwendung nach Anspruch 1, **dadurch gekennzeichnet, dass** die Kernlage (6) ein Flächengewicht von 100 - 500 g/m², insbesondere von 125 - 400 g/m², insbesondere von 125 - 300 g/m², insbesondere von 125 - 250 g/m² und weiter insbesondere von 150 - 250 g/m² aufweist.

3. Verwendung nach Anspruch 1 oder 2, **dadurch gekennzeichnet, dass** die Kernlage (6) eine Dicke von 3 bis 18 mm, insbesondere von 3 - 15 mm, insbesondere von 3 - 12 mm, insbesondere von 3,5 - 10 mm, insbesondere von 3,5 - 8 mm, insbesondere von 4 - 8 mm aufweist.

4. Verwendung nach Anspruch 1, 2 oder 3, **dadurch gekennzeichnet, dass** die Bindefasern Bikomponentenfasern umfassen.

5. Verwendung nach einem oder mehreren der vorstehenden Ansprüche, **dadurch gekennzeichnet, dass** die Bikomponentenfasern PP/PE-Bikomponentenfasern oder PES/CoPES-Bikomponentenfasern umfassen.

6. Verwendung nach einem oder mehreren der vorstehenden Ansprüche, **dadurch gekennzeichnet, dass** die Bikomponentenfasern (vor der thermischen Behandlung der Kernlage) eine Faserstärke von wenigstens 10 dtex, insbesondere von wenigstens 12 dtex, insbesondere von wenigstens 14 dtex, insbesondere von wenigstens 15 dtex und weiter insbesondere von 15 dtex - 130 dtex aufweisen.

7. Verwendung nach Anspruch 6, **dadurch gekennzeichnet, dass** die Bikomponentenfasern eine Faserlänge von wenigstens 20 mm, insbesondere von wenigstens 30 mm und weiter insbesondere von 35 - 100 mm aufweisen.

8. Verwendung nach einem oder mehreren der vorstehenden Ansprüche, **dadurch gekennzeichnet, dass** die Bindefasern Monokomponentenfasern umfassen.

9. Verwendung nach einem oder mehreren der vorstehenden Ansprüche, **dadurch gekennzeichnet, dass** die Kernlage (6) Trägerfasern auf Polyolefin-Basis, insbesondere aus PP, umfasst.

10. Verwendung nach einem oder mehreren der vorstehenden Ansprüche, **dadurch gekennzeichnet, dass** die Kernlage (6) eine Höchstzugkraft in Längsrichtung (HZK längs) von wenigstens 5N/5cm, insbesondere von wenigstens 5,5N/5cm aufweist, jeweils ohne Vernadelung der Kernlage.

11. Verwendung nach einem oder mehreren der vorstehenden Ansprüche, **dadurch gekennzeichnet, dass** die Kernlage (6) eine Höchstzugkraft in Längsrichtung (HZK längs) von wenigstens 6,5N/5cm, insbesondere von wenigstens 7N/5cm, insbesondere von wenigstens 7,5N/5cm aufweist, jeweils im vernadelten Zustand der Kernlage.

12. Verwendung nach einem oder mehreren der vorstehenden Ansprüche, **dadurch gekennzeichnet, dass** die Kernlage (6) eine Höchstzugkraftdehnung in Längsrichtung (HZKD längs) von wenigstens 35 % aufweist, ohne Vernadelung der Kernlage.

13. Verwendung nach einem oder mehreren der vorstehenden Ansprüche, **dadurch gekennzeichnet, dass** die Kernlage (6) eine Höchstzugkraftdehnung in Längsrichtung (HZKD längs) von wenigstens 45 %, insbesondere von wenigstens 50 % aufweist, jeweils im vernadelten Zustand der Kernlage.

14. Verwendung nach einem oder mehreren der vorstehenden Ansprüche, **dadurch gekennzeichnet, dass** die Kernlage (6) zusätzlich zur thermischen Bindung vernadelt ist.

15. Verwendung nach einem oder mehreren der vorstehenden Ansprüche, **dadurch gekennzeichnet, dass** wenigstens zwei Deckschichten (8) vorgesehen sind und die Kernlage (6) zwischen diesen Deckschichten (8) sandwichartig angeordnet ist.

16. Verwendung nach einem oder mehreren der vorstehenden Ansprüche, **dadurch gekennzeichnet, dass** die wenigstens eine Deckschicht (8) ein Multiaxialgelege aus Verstärkungsfäden (10) umfasst.

17. Faserverstärktes Kunststoffteil in Form eines mit flüssigem, jedoch aushärtbarem Kunststoff in Form eines Harzes, insbesondere auf Polyesterbasis oder Epoxybasis, infiltrierten Vlieslaminats (2) mit einer Vliesschicht (4) als Kernlage (6) (core) und wenigstens einer Deckschicht (8), welche Verstärkungsfasern (10) umfasst oder aus Verstärkungsfasern (10) gebildet ist, wobei die Verstärkungsfasern (10) der wenigstens einen Deckschicht (8) Glasfasern oder Carbonfasern, insbesondere Aramidfasern umfassen, wobei die Kernlage (6) eine Fasermischung aus Trägerfasern und thermoplastischen Bindefasern umfasst, wobei der Schmelz- oder Erweichungspunkt der Bindefasern geringer ist als derjenige der Trägerfasern und die die Kernlage (6) bildende Vliesschicht (4) durch Erwärmen auf die Schmelz- oder Erweichungstemperatur der Bindefasern, jedoch unterhalb der Schmelz- oder Erweichungstemperatur der Trägerfasern thermisch verfestigt ist, und wobei die wenigstens eine Deckschicht (8) und die Kernlage (6) durch eine Naht unter Verwendung eines Nähfadens (12, 14) miteinander verbunden sind.

18. Faserverstärktes Kunststoffteil nach Anspruch 17, **dadurch gekennzeichnet, dass** die Kernlage (6) ein Flächengewicht von 100 - 500 g/m², insbesondere von 125 - 400 g/m², insbesondere von 125 - 300 g/m², insbesondere von 125 - 250 g/m² und weiter insbesondere von 150 - 250 g/m² aufweist.

19. Faserverstärktes Kunststoffteil nach Anspruch 17 oder 18, **dadurch gekennzeichnet, dass** die Kernlage (6) eine Dicke von 3 bis 18 mm, insbesondere von 3 - 15 mm, insbesondere von 3 - 12 mm, insbesondere von 3,5 - 10 mm, insbesondere von 3,5 - 8 mm, insbesondere von 4 - 8 mm aufweist.

20. Faserverstärktes Kunststoffteil nach Anspruch 17, 18 oder 19, **dadurch gekennzeichnet, dass** die Bindefasern Bikomponentenfasern umfassen.

21. Faserverstärktes Kunststoffteil nach einem oder mehreren der Ansprüche 17 - 20, **dadurch gekennzeichnet, dass** die Bikomponentenfasern PP/PE-Bikomponentenfasern oder PES/CoPES-Bikomponentenfasern umfassen.

22. Faserverstärktes Kunststoffteil nach einem oder mehreren der vorstehenden Ansprüche 17 - 21, **dadurch gekennzeichnet, dass** die Bikomponentenfasern (vor der thermischen Behandlung der Kernlage) eine Faserstärke von wenigstens 10 dtex, insbesondere von wenigstens 12 dtex, insbesondere von wenigstens 14 dtex, insbesondere von wenigstens 15 dtex und weiter insbesondere von 15 dtex - 130 dtex aufweisen.

23. Faserverstärktes Kunststoffteil nach Anspruch 22, **dadurch gekennzeichnet, dass** die Bikomponentenfasern eine Faserlänge von wenigstens 20 mm, insbesondere von wenigstens 30 mm und weiter insbesondere von 35 - 100 mm aufweisen.

24. Faserverstärktes Kunststoffteil nach einem oder mehreren der vorstehenden Ansprüche 17 - 23, **dadurch gekennzeichnet, dass** die Bindefasern Monokomponentenfasern umfassen.

25. Faserverstärktes Kunststoffteil nach einem oder mehreren der vorstehenden Ansprüche 17 - 24, **dadurch gekennzeichnet, dass** die Kernlage (6) Trägerfasern auf Polyolefin-Basis, insbesondere aus PP, umfasst.

26. Faserverstärktes Kunststoffteil nach einem oder mehreren der vorstehenden Ansprüche 17 - 25, **dadurch gekennzeichnet, dass** die Kernlage (6) zusätzlich zur thermischen Bindung vernadelt ist.

27. Faserverstärktes Kunststoffteil nach einem oder mehreren der vorstehenden Ansprüche 17 - 26, **dadurch gekennzeichnet, dass** wenigstens zwei Deckschichten (8) vorgesehen sind und die Kernlage (6) zwischen diesen Deckschichten (8) sandwichartig angeordnet ist.

28. Faserverstärktes Kunststoffteil nach einem oder mehreren der vorstehenden Ansprüche 17 - 27, **dadurch gekennzeichnet, dass** die wenigstens eine Deckschicht (8) ein Multiaxialgelege aus Verstärkungsfäden (10) umfasst.

## Claims

1. Use of a non-woven material laminate (2) with a non-woven material layer (4) as a core (6) and at least one outer layer (8), which comprises reinforcing fibres (10) or is formed from reinforcing fibres (10), wherein the reinforcing fibres (10) of the at least one outer layer (8) comprise glass fibres or carbon fibres, in particular aramid fibres, wherein the core (6) comprises a mixture of fibres consisting of support fibres and thermoplastic binder fibres, wherein the melting or softening point of the binder fibres is lower than that of the support fibres and the non-woven material layer (4) forming the core (6) is thermally strengthened by being heated to the melting or softening temperature of the binder fibres but to below the melting or softening temperature of the support fibres, and wherein the at least one outer layer (8) and the core (6) are connected to one another via a seam by using a sewing thread (12, 14), for producing a fibre-reinforced plastics material part by infiltrating the non-woven material (2) with a liquid but curable plastics material in the form of a resin, based in particular on polyester or epoxy, in a mould corresponding to the shape of the plastics material part to be produced.

2. Use according to claim 1, **characterised in that** the core (6) has a weight per unit area of from 100 to 500 g/m², in particular from 125 to 400 g/m², in particular from 125 to 300 g/m², in particular from 125 to 250 g/m² and more particularly from 150 to 250 g/m².

3. Use according to either claim 1 or claim 2, **characterised in that** the core (6) has a thickness of from 3 to 18 mm, in particular from 3 to 15 mm, in particular from 3 to 12 mm, in particular from 3.5 to 10 mm, in particular from 3.5 to 8 mm, in particular from 4 to 8 mm.

4. Use according to claim 1, claim 2 or claim 3, **characterised in that** the binder fibres comprise bicomponent fibres.

5. Use according to one or more of the preceding claims, **characterised in that** the bicomponent fibres comprise PP/PE bicomponent fibres or PES/CoPES bicomponent fibres.

6. Use according to one or more of the preceding claims, **characterised in that** the bicomponent fibres (before thermal treatment of the core) have a fibre thickness of at least 10 dtex, in particular at least 12 dtex, in particular at least 14 dtex, in particular at least 15 dtex and more particularly from 15 dtex to 130 dtex.

7. Use according to claim 6, **characterised in that** the bicomponent fibres have a fibre length of at least 20 mm, in particular at least 30 mm, and more particularly from 35 to 100 mm.

8. Use according to one or more of the preceding claims, **characterised in that** the binder fibres comprise monocomponent fibres.

9. Use according to one or more of the preceding claims, **characterised in that** the core (6) comprises polyolefin-based support fibres, made in particular of PP.

10. Use according to one or more of the preceding claims, **characterised in that** the core (6) has a tensile strength in the longitudinal direction (longitudinal TS) of at least 5 N/5 cm, in particular at least 5.5 N/5 cm, without respective needling of the core.

11. Use according to one or more of the preceding claims, **characterised in that** the core (6), in the respective needled state, has a tensile strength in the longitudinal direction (longitudinal TS) of at least 6.5 N/5 cm, in particular of at least 7 N/5 cm, in particular of at least 7.5 N/5 cm.

12. Use according to one or more of the preceding claims, **characterised in that** the core (6) has a tensile elongation in the longitudinal direction (longitudinal TE) of at least 35 %, without needling of the core.

13. Use according to one or more of the preceding claims, **characterised in that**, in the needled state, the core (6) has a tensile elongation in the longitudinal direction (longitudinal TE) of at least 45 %, in particular at least 50 %.

14. Use according to one or more of the preceding claims, **characterised in that** the core (6) is needled in addition to being thermally bound.

15. Use according to one or more of the preceding claims, **characterised in that** at least two outer layers (8) are provided and the core (6) is arranged in a sandwich-like manner between said outer layers (8).

16. Use according to one or more of the preceding claims, **characterised in that** the at least one outer layer (8) comprises a multiaxial non-woven fabric made of reinforcing fibres (10).

17. Fibre-reinforced plastics material part in the form of a non-woven material laminate (2) infiltrated with a liquid but curable plastics material in the form of a resin, based in particular on polyester or epoxy, with a non-woven material layer (4) as a core (6) and at least one outer layer (8), which comprises reinforcing fibres (10) or is formed from reinforcing fibres (10), wherein the reinforcing fibres (10) of the at least one outer layer (8) comprise glass fibres or carbon fibres, in particular aramid fibres, wherein the core (6) comprises a mixture of fibres consisting of support fibres and thermoplastic binder fibres, wherein the melting or softening point of the binder fibres is lower than that of the support fibres and the non-woven material layer (4) forming the core (6) is thermally strengthened by being heated to the melting or softening temperature of the binder fibres but to below the melting or softening temperature of the support fibres, and wherein the at least one outer layer (8) and the core (6) are connected to one another via a seam by using a sewing thread (12, 14).

18. Fibre-reinforced plastics material part according to claim 17, **characterised in that** the core (6) has a weight per unit area of from 100 to 500 g/m², in particular from 125 to 400 g/m², in particular from 125 to 300 g/m², in particular from 125 to 250 g/m² and more particularly from 150 to 250 g/m².

19. Fibre-reinforced plastics material part according to claim 17 or claim 18, **characterised in that** the core (6) has a thickness from 3 to 18 mm, in particular of from 3 to 15 mm, in particular from 3 to 12 mm, in particular from 3.5 to 10 mm, in particular from 3.5 to 8 mm, in particular from 4 to 8 mm.

20. Fibre-reinforced plastics material part according to claim 17, claim 18 or claim 19, in that the binder fibres comprise bicomponent fibres.

21. Fibre-reinforced plastics material part according to one or more of the preceding claims 17 to 20, **characterised in that** the bicomponent fibres comprise PP/PE bicomponent fibres or PES/CoPES bicomponent fibres.

22. Fibre-reinforced plastics material part according to one or more of the preceding claims 17 to 21, **characterised in that** the bicomponent fibres (before thermal treatment of the core) have a fibre thickness of at least 10 dtex, in particular at least 12 dtex, in particular at least 14 dtex, in particular at least 15 dtex and more particularly from 15 dtex to 130 dtex.

23. Fibre-reinforced plastics material part according to claim 22, **characterised in that** the bicomponent fibres have a fibre length of at least 20 mm, in particular at least 30 mm, and more particularly from 35 to 100 mm.

24. Fibre-reinforced plastics material part according to one or more of the preceding claims 17 to 23, **characterised in that** the binder fibres comprise monocomponent fibres.

25. Fibre-reinforced plastics material part according to one or more of the preceding claims 17 to 24, **characterised in that** the core (6) comprises polyolefin-based support fibres, made in particular of PP.

26. Fibre-reinforced plastics material part according to one or more of the preceding claims 17 to 25, **characterised in that** the core (6) is needled in addition to being thermally bound.

27. Fibre-reinforced plastics material part according to one or more of the preceding claims 17 to 26, **characterised in that** at least two outer layers (8) are provided and the core (6) is arranged in a sandwich-like manner between said outer layers (8).

28. Fibre-reinforced plastics material part according to one or more of the preceding claims 17 to 27, **characterised in that** the at least one outer layer (8) comprises a multiaxial non-woven fabric made of reinforcing fibres (10).

## Revendications

1. Utilisation d'un stratifié non tissé (2) avec une couche de non-tissé (4) en tant que couche centrale (6) (âme) et au moins une couche de recouvrement (8) qui comprend des fibres de renforcement (10) ou qui est formée par des fibres de renforcement (10), dans laquelle les fibres de renforcement (10) de la ou lesdites couche(s) de recouvrement (8) comprennent des fibres de verre ou des fibres de carbone, en particulier des fibres d'aramide, la couche centrale (6) comprend un mélange de fibres composé de fibres porteuses et de fibres de liaison thermoplastiques, le point de fusion ou de ramollissement des fibres de liaison est inférieur à celui des fibres porteuses et la couche de non-tissé (4) formant la couche centrale (6) est consolidée thermiquement en chauffant les fibres de liaison à leur température de fusion ou de ramollissement mais en dessous de la température de fusion ou de ramollissement des fibres porteuses, et la ou lesdites couche(s) de recouvrement (8) et la couche centrale (6) sont reliées entre elles par une couture en utilisant un fil à coudre (12, 14), pour produire une pièce en matière plastique renforcée de fibres en imprégnant le stratifié non tissé (2) avec une matière plastique liquide mais durcissable sous la forme d'une résine, en particulier à base de polyester ou à base d'époxyde, dans un moule correspondant à la forme de la pièce en matière plastique à produire.

2. Utilisation selon la revendication 1, **caractérisée en ce que** la couche centrale (6) présente un grammage de 100 à 500 g/m², en particulier de 125 à 400 g/m², en particulier de 125 à 300 g/m², en particulier de 125 à 250 g/m² et plus particulièrement de 150 à 250 g/m².

3. Utilisation selon la revendication 1 ou 2, **caractérisée en ce que** la couche centrale (6) présente une épaisseur de 3 à 18 mm, en particulier de 3 à 15 mm, en particulier de 3 à 12 mm, en particulier de 3,5 à 10 mm, en particulier de 3,5 à 8 mm, en particulier de 4 à 8 mm.

4. Utilisation selon la revendication 1, 2 ou 3, **caractérisée en ce que** les fibres de liaison comprennent des fibres bicomposants.

5. Utilisation selon l'une ou plusieurs des revendications précédentes, **caractérisée en ce que** les fibres bicomposants comprennent des fibres bicomposants PP/PE ou des fibres bicomposants PES/CoPES.

6. Utilisation selon l'une ou plusieurs des revendications précédentes, **caractérisée en ce que** les fibres bicomposants (avant le traitement thermique de la couche centrale) présentent un titre d'au moins 10 dtex, en particulier d'au moins 12 dtex, en particulier d'au moins 14 dtex, en particulier d'au moins 15 dtex et plus particulièrement de 15 dtex à 130 dtex.

7. Utilisation selon la revendication 6, **caractérisée en ce que** les fibres bicomposants présentent une longueur d'au moins 20 mm, en particulier d'au moins 30 mm et plus particulièrement de 35 à 100 mm.

8. Utilisation selon l'une ou plusieurs des revendications précédentes, **caractérisée en ce que** les fibres de liaison comprennent des fibres monocomposants.

9. Utilisation selon l'une ou plusieurs des revendications précédentes, **caractérisée en ce que** la couche centrale (6) comprend des fibres porteuses à base de polyoléfine, en particulier en PP.

10. Utilisation selon l'une ou plusieurs des revendications précédentes, **caractérisée en ce que** la couche centrale (6) présente une force de traction maximale dans le sens longitudinal (FTM-L) d'au moins 5 N / 5 cm, en particulier d'au moins 5,5 N / 5 cm, à chaque fois sans aiguilletage de la couche centrale.

11. Utilisation selon l'une ou plusieurs des revendications précédentes, **caractérisée en ce que** la couche centrale (6) présente une force de traction maximale dans le sens longitudinal (FTM-L) d'au moins 6,5 N / 5 cm, en particulier d'au moins 7 N / 5 cm, en particulier d'au moins 7,5 N / 5 cm, à chaque fois dans l'état aiguilleté de la couche centrale.

12. Utilisation selon l'une ou plusieurs des revendications précédentes, **caractérisée en ce que** la couche centrale (6) présente un allongement à la force de traction maximale dans le sens longitudinal (AFTM-L) d'au moins 35%, sans aiguilletage de la couche centrale.

13. Utilisation selon l'une ou plusieurs des revendications précédentes, **caractérisée en ce que** la couche centrale (6) présente un allongement à la force de traction maximale dans le sens longitudinal (AFTM-L) d'au moins 45%, en particulier d'au moins 50%, à chaque fois dans l'état aiguilleté de la couche centrale.

14. Utilisation selon l'une ou plusieurs des revendications précédentes, **caractérisée en ce que** la couche centrale (6) est aiguilletée en plus de la liaison thermique.

15. Utilisation selon l'une ou plusieurs des revendications précédentes, **caractérisée en ce qu'**il est prévu au moins deux couches de recouvrement (8) et **en ce que** la couche centrale (6) est prise en sandwich entre ces couches de recouvrement (8).

16. Utilisation selon l'une ou plusieurs des revendications précédentes, **caractérisée en ce que** la ou lesdites couche(s) de recouvrement (8) comprend une armure multiaxiale en fils de renforcement (10).

17. Pièce en matière plastique renforcée de fibres sous la forme d'un stratifié non tissé (2), imprégné avec une matière plastique liquide mais durcissable sous la forme d'une résine, en particulier à base de polyester ou à base d'époxyde, comprenant une couche de non-tissé (4) en tant que couche centrale (6) (âme) et au moins une couche de recouvrement (8) qui comprend des fibres de renforcement (10) ou qui est formée par des fibres de renforcement (10), dans laquelle les fibres de renforcement (10) de ladite au moins une couche de recouvrement (8) comprennent des fibres de verre ou des fibres de carbone, en particulier des fibres d'aramide, la couche centrale (6) comprend un mélange de fibres composé de fibres porteuses et de fibres de liaison thermoplastiques, le point de fusion ou de ramollissement des fibres de liaison est inférieur à celui des fibres porteuses et la couche de non-tissé (4) formant la couche centrale (6) est consolidée thermiquement en chauffant les fibres de liaison à leur température de fusion ou de ramollissement mais en dessous de la température de fusion ou de ramollissement des fibres porteuses, et la ou lesdites couche(s) de recouvrement (8) et la couche centrale (6) sont reliées entre elles par une couture en utilisant un fil à coudre (12, 14).

18. Pièce en matière plastique renforcée de fibres selon la revendication 17, **caractérisée en ce que** la couche centrale (6) présente un grammage de 100 à 500 g/m², en particulier de 125 à 400 g/m², en particulier de 125 à 300 g/m², en particulier de 125 à 250 g/m² et plus particulièrement de 150 à 250 g/m².

19. Pièce en matière plastique renforcée de fibres selon la revendication 17 ou 18, **caractérisée en ce que** la couche centrale (6) présente une épaisseur de 3 à 18 mm, en particulier de 3 à 15 mm, en particulier de 3 à 12 mm, en particulier de 3,5 à 10 mm, en particulier de 3,5 à 8 mm, en particulier de 4 à 8 mm.

20. Pièce en matière plastique renforcée de fibres selon la revendication 17, 18 ou 19, **caractérisée en ce que** les fibres de liaison comprennent des fibres bicomposants.

21. Pièce en matière plastique renforcée de fibres selon l'une ou plusieurs des revendications 17 à 20, **caractérisée en ce que** les fibres bicomposants comprennent des fibres bicomposants PP/PE ou des fibres bicomposants PES/CoPES.

22. Pièce en matière plastique renforcée de fibres selon l'une ou plusieurs des revendications 17 à 21 précédentes, **caractérisée en ce que** les fibres bicomposants (avant le traitement thermique de la couche centrale) présentent un titre d'au moins 10 dtex, en particulier d'au moins 12 dtex, en particulier d'au moins 14 dtex, en particulier d'au moins 15 dtex et plus particulièrement de 15 dtex à 130 dtex.

23. Pièce en matière plastique renforcée de fibres selon la revendication 22, **caractérisée en ce que** les fibres bicomposants présentent une longueur d'au moins 20 mm, en particulier d'au moins 30 mm et plus particulièrement de 35 à 100 mm.

24. Pièce en matière plastique renforcée de fibres selon l'une ou plusieurs des revendications 17 à 23 précédentes, **caractérisée en ce que** les fibres de liaison comprennent des fibres monocomposants.

25. Pièce en matière plastique renforcée de fibres selon l'une ou plusieurs des revendications 17 à 24 précédentes, **caractérisée en ce que** la couche centrale (6) comprend des fibres porteuses à base de polyoléfine, en particulier en PP.

26. Pièce en matière plastique renforcée de fibres selon l'une ou plusieurs des revendications 17 à 25 précédentes, **caractérisée en ce que** la couche centrale (6) est aiguilletée en plus de la liaison thermique.

27. Pièce en matière plastique renforcée de fibres selon l'une ou plusieurs des revendications 17 à 26 précédentes, **caractérisée en ce qu'**il est prévu au moins deux couches de recouvrement (8) et **en ce que** la couche centrale (6) est prise en sandwich entre ces couches de recouvrement (8).

28. Pièce en matière plastique renforcée de fibres selon l'une ou plusieurs des revendications 17 à 27 précédentes, **caractérisée en ce que** la ou lesdites couche(s) de recouvrement (8) comprend une armure multiaxiale en fils de renforcement (10).
